# EUROPEAN PATENT APPLICATION

(11) **EP 4 806 780 A1**
(43) Date of publication of application: **16.09.2026**
(21) Application number: 26163538.7
(22) Date of filing: 10.03.2026
(51) Int. Cl.: B64C 3/18, B64C 3/26

(54) **AIRCRAFT WING ARRANGEMENT AND AIRCRAFT WING**

(30) Priority: 12.03.2025 GB 202503648
(71) Applicant: Airbus Operations Ltd, Filton, Bristol BS34 7PA (GB)
(72) Inventor: WATKINS, Niall, Bristol, BS34 7PA (GB)
(74) Representative: Abel & Imray LLP

(57) **Abstract**

An aircraft wing arrangement (1, 101, 201, 302) is provided. The aircraft wing arrangement comprises a wing skin (2), a first set (8) of stringer(s) (8A-E) for providing support to the wing skin, and extending from a first region (5) of the wing skin to a second region (6) of the wing skin; and a second set (9) of stringer(s) (9A-E) for providing support to the wing skin, and extending from a third region (7) of the wing skin to the second region of the wing skin. The second region of the wing skin is between the first and third regions of the wing skin. At least one stringer of the first set of stringers overlaps with at least one adjacent stringer of the second set of stringers in the second region of the wing skin. An aircraft wing (20, 20') and an aircraft (25) are also provided.

## Description

### BACKGROUND OF THE INVENTION

The present invention relates to aircraft wing arrangements, particularly those comprising stringers. More particularly, but not exclusively, the present invention concerns an aircraft wing arrangement, an aircraft wing and an aircraft.

Aircraft wings typically comprise a pair of wing skins supported by ribs, which typically extend from a forward portion of the wing to a rear portion of the wing, and spars and stringers, both of which typically extend along the length of the wing. The stringers are typically straight. For conventional wing geometries, straight stringers provide suitable support for the wing. This is because the stringer substantially follows the running load, which is the principal direction that the load follows through the wing skin. However, for less conventional wing geometries that are potentially more efficient, straight wing stringers may not provide sufficient support for the wing because the stringer no longer follows the running load.

The present invention seeks to mitigate one or more of the above-mentioned problems. Alternatively or additionally, the present invention seeks to provide an improved aircraft wing arrangement.

### SUMMARY OF INVENTION

In accordance with a first aspect of the present invention, there is provided an aircraft wing arrangement, the aircraft wing arrangement comprising:
a wing skin;
a first set of stringers for providing support to the wing skin, and extending from a first region of the wing skin to a second region of the wing skin; and
a second set of stringers for providing support to the wing skin, and extending from a third region of the wing skin to the second region of the wing skin;

wherein the second region of the wing skin is between the first and third regions of the wing skin; and
wherein there is overlap between at least one stringer of the first set of stringers and at least one adjacent stringer of the second set of stringers in the second region of the wing skin.

The applicant has discovered that by providing such an overlap, it may be possible to provide extra support to a wing skin, and/or facilitate different attachment arrangements of stringers to wing skins, and/or facilitate the provision of different wing geometries.

The aircraft wing arrangement optionally comprises a first wing skin portion extending from the first region of the wing skin to the second region of the wing skin, and a second wing skin portion extending from the third region of the wing skin to the second region of the wing skin, the first wing skin portion having a first longitudinal axis from the first region of the wing skin to the second region of the wing skin, the second wing skin portion having a second longitudinal axis from the third region of the wing skin to the second region of the wing skin. Optionally, there is an overlap between at least one stringer of the first set of stringers and at least one adjacent stringer of the second set of stringers in the second region of the wing skin in a direction parallel to the first longitudinal axis and/or the second longitudinal axis. Optionally, there is an overlap between at least one stringer of the first set of stringers and at least one adjacent stringer of the second set of stringers in the second region of the wing skin in a direction parallel to the first longitudinal axis and in a direction parallel to the second longitudinal axis. Optionally, there is an overlap between at least one stringer of the first set of stringers and at least one adjacent stringer of the second set of stringers in the second region of the wing skin in a direction parallel to the first longitudinal axis, but not in a direction parallel to the second longitudinal axis. Optionally, there is an overlap between at least one stringer of the first set of stringers and at least one adjacent stringer of the second set of stringers in the second region of the wing skin in a direction parallel to the second longitudinal axis, but not in a direction parallel to the first longitudinal axis.

Many of the statements below refer to overlap between one or more stringers of the first set of stringers and adjacent stringer(s) of the second set of stringers, and/or overlap between one of more stringers of the second set of stringers and adjacent stringer(s) of the first set of stringers. Such overlap may optionally be in a direction parallel to the first longitudinal axis and in a direction parallel to the second longitudinal axis. Such overlap may optionally be in a direction parallel to the first longitudinal axis, but not in a direction parallel to the second longitudinal axis. Such overlap may optionally be in a direction parallel to the second longitudinal axis, but not in a direction parallel to the first longitudinal axis. For example, there may be overlap between more than one stringer of the first set of stringers and a corresponding at least one adjacent stringer of the second set of stringers in both a direction parallel to the first longitudinal axis and in a direction parallel to the second longitudinal axis i.e. each of two or more stringers of the first set of stringers may overlap with respective adjacent stringer(s) of the second set of stringers in both a direction parallel to the first longitudinal axis and in a direction parallel to the second longitudinal axis. Furthermore, there may be overlap between at least one stringer of the first set of stringers and at least one adjacent stringer of the second set of stringers in a direction parallel to the first longitudinal axis, but not in a direction parallel to the second longitudinal axis. Likewise, there may be overlap between at least one stringer of the first set of stringers and at least one adjacent stringer of the second set of stringers in a direction parallel to the second longitudinal axis, but not in a direction parallel to the first longitudinal axis.

The first set of stringers comprises a plurality of stringers, such as at least two, optionally at least three, optionally at least four or optionally at least five stringers. The second set of stringers comprises a plurality of stringers, such as at least two, optionally at least three, optionally at least four or optionally at least five stringers. Optionally, there is an overlap between at least one stringer of the first set of stringers and two adjacent stringers of the second set of stringers. Overlap of multiple stringers may be advantageous. At least two stringers of the plurality of stringers of the first set may optionally be parallel to one another. Alternatively or additionally, at least two stringers of the plurality of stringers of the first set may optionally not be parallel to one another. Optionally, none of the plurality of stringers of the first set may be parallel to one another. Optionally, at least two stringers of the plurality of stringers of the second set may optionally be parallel to one another. Alternatively or additionally, at least two stringers of the plurality of stringers of the second set may optionally not be parallel to one another. Optionally, none of the plurality of stringers of the second set may be parallel to one another.

Optionally, there is an overlap between at least one stringer of the second set of stringers and an adjacent stringer of the first set of stringers. Optionally, there is an overlap between at least one stringer of the second set of stringers and two adjacent stringers of the first set of stringers. Overlap of multiple stringers may be advantageous.

Optionally, there is an overlap between each of a plurality of stringers of the first set of stringers and at least one respective adjacent stringer and optionally two respective adjacent stringers of the second set of stringers. Optionally, there is an overlap between each of a plurality of stringers of the second set of stringers and at least one respective adjacent stringer and optionally two respective adjacent stringers of the first set of stringers. Overlap of multiple stringers may be advantageous.

Optionally, there is an overlap between each of a majority of stringers of the first set of stringers and at least one respective adjacent stringer and optionally two respective adjacent stringers of the second set of stringers. Optionally, there is an overlap between each of a majority of stringers of the second set of stringers and at least one respective adjacent stringer and optionally two respective adjacent stringers of the first set of stringers. Optionally, there is an overlap between each stringer of the first set of stringers and two adjacent stringers of the second set of stringers. Optionally, there is an overlap between each stringer of the second set of stringers and two adjacent stringers of the first set of stringers. It is appreciated that it may not be possible for each stringer of the first set of stringers to overlap with two adjacent stringers of the second set of stringers, and for each stringer of the second set of stringers to overlap with two adjacent stringers of the first set of stringers.

Optionally, at least one, optionally more than one and optionally each stringer of the stringers of the first set of stringers has two ends, one end located in the first region of the wing skin and one end located in the second region of the wing skin. Optionally, at least one, optionally more than one and optionally each stringer of the stringers of the second set of stringers has two ends, one end located in the second region of the wing skin and one end located in the third region of the wing skin.

Optionally, an end of a first stringer of the first set of stringers overlaps with an end of an adjacent stringer of the second set of stringers in the second region of the wing skin. Optionally, an end of a first stringer of the first set of stringers overlaps with the ends of two adjacent stringers of the second set of stringers in the second region of the wing skin. Optionally, an end of each stringer of a plurality of the first set of stringers overlaps with the end of at least one respective adjacent stringer and optionally the ends of two respective adjacent stringers of the second set of stringers in the second region of the wing skin. Overlap of multiple stringers may be advantageous.

Optionally, an end of a first stringer of the first set of stringers abuts or is adjacent to an end of a first stringer of the second set of stringers in the second region of the wing skin, there being an overlap between the first stringer of the first set of stringers and a second and/or a third stringer of the second set of stringers, the second and third stringers of the second set of stringers being adjacent to, and to either side of the first stringer of the second set of stringers, there being no overlap between the first stringer of the second set of stringers and adjacent stringers of the first set of stringers. Such an arrangement may produce a staggered arrangement of the ends of the stringers in the second region of the wing skin, which may help facilitate attachment of a stringer to the wing skin.

Optionally, an end of the second stringer of the second set of stringers abuts or is adjacent to an end of a second stringer of the first set of stringers in the second region of the wing skin, the second stringer of the first set of stringers being adjacent to, and to one side of, the first stringer of the first set of stringers, wherein there is an overlap between the second stringer of the second set of stringers and the first stringer of the first set of stringers, wherein there is no overlap between the second stringer of the first set of stringers and adjacent stringers of the second set of stringers. Such an arrangement may produce a staggered arrangement of the ends of the stringers in the second region of the wing skin, which may help facilitate attachment of a stringer to the wing skin.

Optionally, the first set of stringers comprises first, second and third stringers, the second and third stringers being adjacent to, and either side of the first stringer. Optionally, the second set of stringers comprises first, second and third stringers, the second and third stringers being adjacent to, and either side of the first stringer. Optionally, there is an overlap between the first stringer of the first set of stringers and the first stringer, and optionally the second stringer or the third stringer, of the second set of stringers;
wherein there is an overlap between the second stringer of the first set of stringers and the first stringer and optionally the second stringer of the second set of stringers, or there is an overlap between the third stringer of the first set of stringers and the first stringer and optionally the third stringer of the second set of stringers; and
wherein there is overlap between the third stringer of the first set of stringers and the third stringer of the second set of stringers, or there is overlap between the second stringer of the first set of stringers and the second stringer of the second set of stringers. Such an arrangement provides a high density of stringers in the second region of the wing skin where the stringers overlap. Such a high density of stringers can be advantageous in providing support to the wing skin, particular in areas of high load, and may facilitate the provision of different wing geometries.

Optionally, in the second region of the wing skin, the spacing between adjacent stringers in the first set of stringers is substantially the same for a majority of, and optionally substantially all, pairs of adjacent stringers in the first set of stringers. Such a uniform distribution of stringers in the second region may be advantageous in providing support to the wing skin.

Optionally, in the second region of the wing skin, the spacing between adjacent stringers in the second set of stringers is substantially the same for a majority of, and optionally substantially all, pairs of adjacent stringers in the second set of stringers. Such a uniform distribution of stringers in the second region may be advantageous in providing support to the wing skin. Optionally, said spacing in the second set of stringers is optionally substantially the same as the spacing between adjacent stringers in the first set of stringers.

It is possible to arrange for different overlap between stringers in different parts of the wing skin. For example, optionally, there is overlap between at least one stringer of the first set of stringers and at least one adjacent stringer of the second set of stringers in a forward portion of the wing skin, optionally in both a direction parallel to the first longitudinal axis and in a direction parallel to the second longitudinal axis. In this connection, the term "forwards" refers to the position of the wing skin in use. Optionally, there is overlap between at least one stringer of the first set of stringers and at least one adjacent stringer of the second set of stringers in a rearward portion of the wing skin, optionally in both a direction parallel to the first longitudinal axis and in a direction parallel to the second longitudinal axis. In this connection, the term "rearward" refers to the position of the wing skin in use. Optionally, there is overlap between at least one adjacent stringer of the first set of stringers and at least one stringer of the second set of stringers in a forward portion of the wing skin, optionally in both a direction parallel to the first longitudinal axis and in a direction parallel to the second longitudinal axis, while there is either (i) overlap in a direction parallel to the first longitudinal direction but not in a direction parallel to the second longitudinal direction, (ii) overlap in a direction parallel to the second longitudinal direction but not in a direction parallel to the first longitudinal direction, or (iii) no overlap at all, between stringers of the first set and stringers of the second set in a rearward portion of the wing skin. Conversely, optionally, there is overlap between at least one adjacent stringer of the first set of stringers and at least one stringer of the second set of stringers in a rearward portion of the wing skin, optionally in both a direction parallel to the first longitudinal axis and in a direction parallel to the second longitudinal axis, while there is either (i) overlap in a direction parallel to the first longitudinal direction but not in a direction parallel to the second longitudinal direction, (ii) overlap in a direction parallel to the second longitudinal direction but not in a direction parallel to the first longitudinal direction, or (iii) no overlap at all, between stringers of the first set and stringers of the second set in a forward portion of the wing skin.

Overlap between stringers of the first and second sets may be of particular benefit when the first set of stringers and the second set of stringers are not aligned in the same direction, as may be the case for certain, more complex wing skin geometries. In this connection, as mentioned above, the aircraft wing arrangement may comprise a first longitudinal axis of a first wing skin portion from the first region of the wing skin to the second region of the wing skin and a second longitudinal axis of a second wing skin portion from the third region of the wing skin to the second region of the wing skin. The first and second longitudinal axes may not be parallel to one another. For example, the angle between the first and second longitudinal axes may be no more than 175 degrees, optionally no more than 170 degrees, optionally no more than 165 degrees, optionally no more than 160 degrees and optionally no more than 150 degrees. For example, the angle between the first and second longitudinal axes may be at least 140 degrees, optionally at least 145 degrees, optionally at least 150 degrees, optionally at least 155 degrees, optionally at least 160 degrees, optionally at least 165 degrees and optionally at least 170 degrees.

Optionally, the first set of stringers is not parallel to the second set of stringers. The first set of stringers may optionally have a mean orientation relative to the wing skin. The second set of stringers may optionally have a mean orientation relative to the wing skin. The mean orientation of the first set of stringers relative to the wing skin is optionally not parallel to the mean orientation of the second set of stringers relative to the wing skin. Optionally, the angle between the mean orientation of the first set of stringers and the mean orientation of the second set of stringers is no more than 175 degrees, optionally no more than 170 degrees, optionally no more than 165 degrees, optionally no more than 160 degrees and optionally no more than 150 degrees. Optionally, the angle between the mean orientation of the first set of stringers and the mean orientation of the second set of stringers is at least 140 degrees, optionally at least 145 degrees, optionally at least 150 degrees, optionally at least 155 degrees, optionally at least 160 degrees, optionally at least 165 degrees and optionally at least 170 degrees.

As mentioned above, overlap between stringers of the first and second set may be of particular benefit when the first set of stringers and the second set of stringers are not aligned in the same direction, as may be the case for certain, more complex wing skin geometries. Therefore, in the second region of the wing skin, a stringer of the first set of stringers is optionally not parallel to an adjacent stringer of the second set of stringers with which said stringer of the first set of stringer overlaps. Optionally, the angle between a stringer of the first set of stringers and an adjacent overlapping stringer of the second set of stringers in the second region of the wing skin may be no more than 175 degrees, optionally no more than 170 degrees, optionally no more than 165 degrees, optionally no more than 160 degrees and optionally no more than 150 degrees. For example, the angle between a stringer of the first set of stringers and an adjacent overlapping stringer of the second set of stringers in the second region of the wing skin may be at least 140 degrees, optionally at least 145 degrees, optionally at least 150 degrees, optionally at least 155 degrees, optionally at least 160 degrees, optionally at least 165 degrees and optionally at least 170 degrees.

Similarly, in the second region of the wing skin, a stringer of the second set of stringers is optionally not parallel to an adjacent stringer of the first set of stringers with which said stringer of the second set of stringer overlaps. Optionally, a stringer of the first set of stringers is optionally not parallel to two adjacent stringers of the second set of stringers with which said stringer of the first set of stringer overlaps. Optionally, the angle between a stringer of the second set of stringers and an adjacent overlapping stringer of the first set of stringers in the second region of the wing skin may be no more than 175 degrees, optionally no more than 170 degrees, optionally no more than 165 degrees, optionally no more than 160 degrees and optionally no more than 150 degrees. For example, the angle between a stringer of the second set of stringers and an adjacent overlapping stringer of the first set of stringers in the second region of the wing skin may be at least 140 degrees, optionally at least 145 degrees, optionally at least 150 degrees, optionally at least 155 degrees, optionally at least 160 degrees, optionally at least 165 degrees and optionally at least 170 degrees. Optionally, a stringer of the second set of stringers is optionally not parallel to two adjacent stringers of the first set of stringers with which said stringer of the second set of stringer overlaps.

The wing skin may optionally comprise composite material. The wing skin may optionally comprise a non-composite material. For example, the wing skin may be a metal wing skin, such as an aluminium wing skin.

As mentioned above, the first set of stringers comprises a plurality of stringers, and the second set of stringers comprises a plurality of stringers. The first set of stringers may have a mean length. The second set of stringers may have a mean length. The mean length of the first set of stringers may be approximately the same as the mean length of the second set of stringers. For example, the mean length of the first set of stringers may be 0.9 to 1.1 times the mean length of the second set of stringers. The first set of stringers may be outboard of the second set of stringers. The mean length of the first set of stringers may be greater than the mean length of the second set of stringers. The mean length of the first set of stringers may optionally be at least 1.1, optionally at least 1.2, optionally at least 1.3, optionally at least 1.5 and optionally at least 2.0 times the mean length of the second set of stringers. Optionally, the mean length of the first set of stringers may be no more than 10.0 times, optionally no more than 8.0 times, optionally no more than 6.0 more times, optionally no more than 5.0 times, optionally no more than 4.0 times, optionally no more than 3.0 times and optionally no more than 2.0 times the mean length of the second set of stringers. The mean length of the second set of stringers may be greater than the mean length of the first set of stringers. The mean length of the second set of stringers may optionally be at least 1.1, optionally at least 1.2, optionally at least 1.3, optionally at least 1.5 and optionally at least 2.0 times the mean length of the first set of stringers. Optionally, the mean length of the second set of stringers may be no more than 10.0 times, optionally no more than 8.0 times, optionally no more than 6.0 more times, optionally no more than 5.0 times, optionally no more than 4.0 times, optionally no more than 3.0 times and optionally no more than 2.0 times the mean length of the first set of stringers.

Optionally, at least one, optionally more than one and optionally each stringer of the first set of stringers comprises composite material. Optionally, at least one, optionally more than one and optionally each stringer of the first set of stringers comprises non-composite material, such as metal. Optionally, at least one, optionally more than one and optionally each stringer of the second set of stringers comprises composite material. Optionally, at least one, optionally more than one and optionally each stringer of the second set of stringers comprises non-composite material, such as metal.

The first region of the wing skin is optionally an outboard region, optionally a wing tip region. The second region of the wing skin is optionally an inboard region, optionally a wing root region.

The second region of the wing skin may optionally be closer to the third region of the wing skin than to the first region of the wing skin.

Optionally, the proportion of the length of the at least one stringer of the first set of stringers that overlaps with at least one adjacent stringer of the second set of stringers in the second region of the wing skin may be at least 1%, optionally at least 3%, optionally at least 5%, optionally at least 7% and optionally at least 10% of the length of said at least one stringer of the first set of stringers.

Optionally, the proportion of the length of the at least one stringer of the first set of stringers that overlaps with at least one adjacent stringer of the second set of stringers in the second region of the wing skin may be no more than 30%, optionally no more than 25%, optionally no more than 20%, optionally no more than 15% and optionally no more than 10% of the length of said at least one stringer of the first set of stringers.

As mentioned above, it is possible for a plurality of stringers of the first set of stringers to overlap with respective adjacent stringers of the second set of stringers. Optionally, the mean proportion of the length of the plurality of stringers of the first set of stringers that overlap with respective adjacent stringers of the second set of stringers in the second region of the wing skin may be at least 1%, optionally at least 3%, optionally at least 5%, optionally at least 7% and optionally at least 10% of the length of said stringers of the first set. The mean proportion may be calculated by first calculating the proportion of overlap for each of the plurality of stringers of the first set of stringers that overlap with respective adjacent stringers of the second set of stringers, and then calculating the mean proportion from the individual proportions of overlap.

Optionally, the mean proportion of the length of the plurality of stringers of the first set of stringers that overlap with respective adjacent stringers of the second set of stringers in the second region of the wing skin may be no more than 30%, optionally no more than 25%, optionally no more than 20%, optionally at least 15% and optionally no more than 10% of the length of said stringers of the first set.

Optionally, the proportion of the length of the at least one stringer of the second set of stringers that overlaps with at least one adjacent stringer of the first set of stringers in the second region of the wing skin may be at least 1%, optionally at least 3%, optionally at least 5%, optionally at least 7% and optionally at least 10% of the length of said at least one stringer of the second set of stringers.

Optionally, the proportion of the length of the at least one stringer of the second set of stringers that overlaps with at least one adjacent stringer of the first set of stringers in the second region of the wing skin may be no more than 30%, optionally no more than 25%, optionally no more than 20%, optionally no more than 15% and optionally no more than 10% of the length of said at least one stringer of the second set of stringers.

As mentioned above, it is possible for a plurality of stringers of the second set of stringers to overlap with respective stringers of the first set of stringers. Optionally, the mean proportion of the length of the plurality of stringers of the second set of stringers that overlap with respective stringers of the first set of stringers in the second region of the wing skin may be at least 1%, optionally at least 3%, optionally at least 5%, optionally at least 7% and optionally at least 10% of the length of the stringers of the second set that overlap with respective stringers of the first set of stringers in the second region of the wing skin. The mean proportion may be calculated by first calculating the proportion of overlap for each of the plurality of stringers of the second set of stringers that overlap with respective adjacent stringers of the first set of stringers, and then calculating the mean proportion from the individual proportions of overlap.

Optionally, the mean proportion of the length of the plurality of stringers of the second set of stringers that overlap with respective adjacent stringers of the first set of stringers in the second region of the wing skin may be no more than 30%, optionally no more than 25%, optionally no more than 20%, optionally at least 15% and optionally no more than 10% of the length of said stringers of the second set.

Optionally, the wing skin may have a wing semi-span of at least 12m, optionally at least 15m, optionally at least 16m, optionally at least 17m, optionally at least 18m, optionally at least 20m, optionally at least 25m and optionally at least 30m.

In accordance with a second aspect of the present invention, there is provided an aircraft wing arrangement, the aircraft wing arrangement comprising:
a wing skin;
a first set of stringers for providing support to the wing skin, and extending from a first region of the wing skin to a second region of the wing skin; and
a second set of stringers for providing support to the wing skin, and extending from a third region of the wing skin to the second region of the wing skin;

wherein the second region of the wing skin is between the first and third regions of the wing skin;
a mean orientation of the first set of stringers relative to the wing skin is not parallel to a mean orientation of the second set of stringers relative to the wing skin.

The applicant has discovered that it may be beneficial for the orientation of one set of stringers to be different from the orientation of another set of stringers. This may be the case for, for example, less conventional aircraft wing arrangements.

The aircraft wing arrangement may comprise a first longitudinal axis of a first wing skin portion from the first region of the wing skin to the second region of the wing skin and a second longitudinal axis of a second wing skin portion from the third region of the wing skin to the second region of the wing skin. The first and second longitudinal axes may not be parallel to one another. For example, the angle between the first and second longitudinal axes may be no more than 175 degrees, optionally no more than 170 degrees, optionally no more than 165 degrees, optionally no more than 160 degrees and optionally no more than 150 degrees. For example, the angle between the first and second longitudinal axes may be at least 140 degrees, optionally at least 145 degrees, optionally at least 150 degrees, optionally at least 155 degrees, optionally at least 160 degrees, optionally at least 165 degrees and optionally at least 170 degrees.

Optionally, at least one stringer of the first set of stringers overlaps with at least one adjacent stringer of the second set of stringers in the second region of the wing skin. The overlap in the aircraft wing arrangement of the second aspect of the present invention may have one or more features described above in relation to the aircraft wing arrangement of the first aspect of the present invention.

The aircraft wing arrangement of the second aspect of the present invention may comprise any of the features described above in relation to the aircraft wing arrangement of the first aspect of the present invention. For example, the first set of stringers may comprise the features of the first set of stringers described above in relation to the aircraft wing arrangement of the first aspect of the present invention. Similarly, the second set of stringers may comprise the features of the second set of stringers described above in relation to the aircraft wing arrangement of the first aspect of the present invention.

**In** accordance with a third aspect of the present invention, there is provided an aircraft wing arrangement comprising:
a wing skin;
a first set of a plurality of stringers for providing support to the wing skin, and extending from an outboard region of the wing skin to a second region of the wing skin; and
a second set of a plurality of stringers for providing support to the wing skin, and extending from an inboard region of the wing skin to the second region of the wing skin;

wherein the second region of the wing skin is between the inboard and outboard regions of the wing skin;
each of the first set of stringers and each of the second set of stringers having an end portion in the second region of the wing skin;
each of the end portions of the first set of stringers in the second region of the wing skin being proximate to an end portion of a corresponding stringer of the second set of stringers in the second region of the wing skin;
the end portions of alternate stringers of the first set of stringers in the second region of the wing skin being closer to the inboard region of the wing skin than the end portions of the other stringers of the first set of stringers in the second portion of the wing skin; and
the end portions of the alternate stringers of the second set of stringers in the second region of the wing skin being closer to the outboard region of the wing skin than the end portions of the other stringers of the second set of stringers in the second region of the wing skin.

Optionally, at least one, optionally more than one and optionally each of the stringers of the first set of stringers has an end portion located in the outboard region of the wing skin. Optionally, at least one, optionally more than one and optionally each of the stringers of the second set of stringers has an end portion located in the inboard region of the wing skin. The aircraft wing arrangement of the third aspect of the present invention may optionally comprise any of the features of the aircraft wing arrangements of the first, second and fourth aspects of the present invention.

In accordance with a fourth aspect of the present invention, there is provided an aircraft wing arrangement comprising:
a wing skin;
a first set of a plurality of stringers for providing support to the wing skin, and extending from an outboard region of the wing skin to a second region of the wing skin; and
a second set of a plurality of stringers for providing support to the wing skin, and extending from an inboard region of the wing skin to the second region of the wing skin;

wherein the second region of the wing skin is between the inboard and outboard regions of the wing skin;
each of the first set of stringers and each of the second set of stringers having an end portion in the second region of the wing skin;
the end portions of the first set of stringers in the second region of the wing skin being closer to the inboard region of the wing skin than the end portions of the second set of stringers in the second region of the wing skin; and
the end portions of the second set of stringers in the second region of the wing skin being closer to the outboard region of the wing skin that the end portions of the first set of stringers in the second region of the wing skin.

Such an aircraft wing arrangement provides overlap between the first and second set of stringers. This may provide additional strength to the aircraft wing arrangement.

Optionally, at least one, optionally more than one and optionally each of the stringers of the first set of stringers has an end portion located in the outboard region of the wing skin. Optionally, at least one, optionally more than one and optionally each of the stringers of the second set of stringers has an end portion located in the inboard region of the wing skin. The aircraft wing arrangement of the fourth aspect of the present invention may optionally comprise any of the features of the aircraft wing arrangements of the first, second and third aspects of the present invention.

In accordance with a fifth aspect of the present invention, there is a provided an aircraft wing comprising an aircraft wing arrangement in accordance with the first, second, third or fourth aspect of the present invention. The aircraft wing may have a wing semi-span of at least 12m, optionally at least 15m, optionally at least 16m, optionally at least 17m, optionally at least 18m, optionally at least 20m, optionally at least 25m and optionally at least 30m.

The aircraft wing may optionally comprise two aircraft wing arrangements in accordance with the first, second, third or fourth aspect of the present invention. A first aircraft wing arrangement in accordance with the first, second, third or fourth aspect of the present invention may form an upper wing skin. A second aircraft wing arrangement in accordance with the first, second, third or fourth aspect of the present invention may form a lower wing skin. The aircraft wing may optionally comprise one or more spars and optionally one or more ribs.

In accordance with a sixth aspect of the present invention, there is provided an aircraft comprising an aircraft wing arrangement in accordance with the first, second, third or fourth aspect of the present invention, and/or a wing in accordance with the fifth aspect of the present invention.

The aircraft is optionally a multi-engine aircraft, optionally comprising two, three or four engines. Optionally, the aircraft may be a jet aircraft. The aircraft may be a wide-bodied aircraft or a narrow-bodied aircraft. The aircraft may be a single aisle aircraft or may be a twin aisle aircraft.

The aircraft may have a length of at least 25m, optionally at least 30m, optionally at least 35m, optionally at least 40m, optionally at least 45m, optionally at least 50m, optionally at least 55m and optionally at least 55m. The aircraft may have a wingspan of at least 25m, optionally at least 30m, optionally at least 35m, optionally at least 40m, optionally at least 45m, optionally at least 50m, optionally at least 55m and optionally at least 60m.

The aircraft may be a passenger aircraft. The aircraft may have a capacity of at least 60 passengers, optionally at least 80 passengers, optionally at least 100 passengers, optionally at least 120 passengers, optionally at least 140 passengers and optionally at least 160 passengers.

It will, of course, be appreciated that features described in relation to one aspect of the present invention may be incorporated into other aspects of the present invention.

### DESCRIPTION OF THE DRAWINGS

Embodiments of the present invention will now be described by way of example only with reference to the accompanying drawings of which:
Figure 1 shows a schematic plan view of an example of an embodiment of an aircraft wing arrangement of the present invention;
Figure 2 shows a schematic plan view of a portion of the aircraft wing arrangement of Figure 1;
Figure 3 shows a schematic plan view of a portion of a further example of an embodiment of an aircraft wing arrangement of the present invention;
Figure 4 shows a schematic plan view of a portion of another example of an embodiment of an aircraft wing arrangement of the present invention;
Figure 5 shows a schematic plan view of a portion of yet another example of an embodiment of an aircraft wing arrangement of the present invention; and
Figure 6 is a schematic perspective view of an example of an embodiment of a wing and of an aircraft of the present invention.

### DETAILED DESCRIPTION

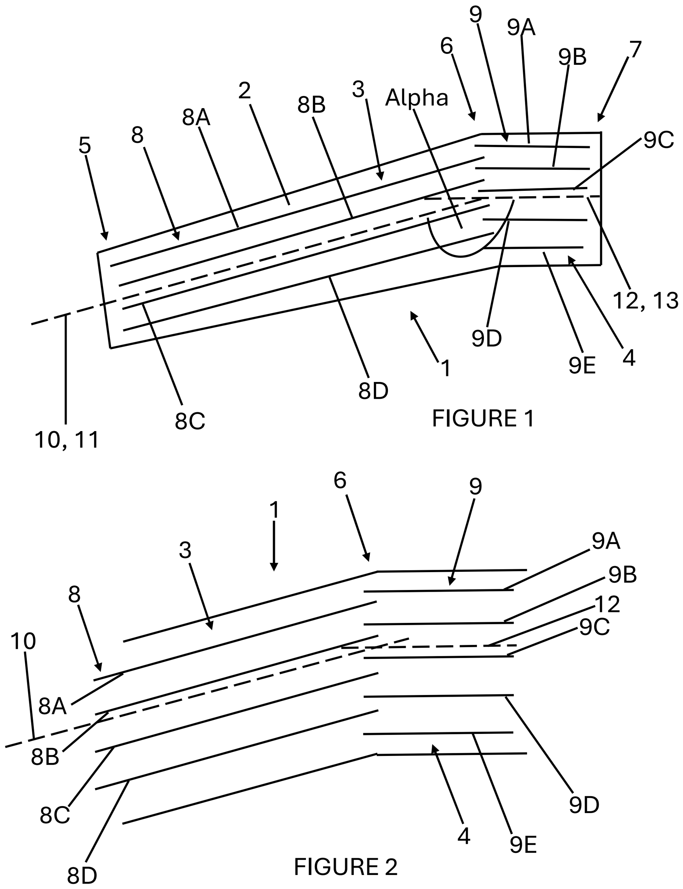

An example of an embodiment of an aircraft wing arrangement of the first, second and fourth aspects of the present invention will now be described by way of example only with reference to Figs. 1 and 2. The aircraft wing arrangement is denoted generally by reference numeral 1, and comprises wing skin 2, and first set 8 of stringers and second set 9 of stringers for supporting wing skin 2. Wing skin 2 comprises an elongate, outboard, first wing skin portion 3 that extends from a first wing skin region 5 to a second wing skin region 6. Wing skin 2 also comprises an inboard, second wing skin portion 4 that extends from a third wing skin region 7 to second wing skin region 6. Second wing skin region 6 is located between first 5 and third 7 wing skin regions. Longitudinal axis 10 of first wing skin portion 3 and longitudinal axis 12 of second wing skin portion 4 are not parallel, with an angle Alpha between the two longitudinal axes 10, 12 of about 160 degrees. First set 8 of stringers comprises four stringers 8A-D, each of which extends from first wing skin region 5 to second wing skin region 6. The mean orientation of four stringers 8A-D (and therefore the mean orientation of the first set 8 of stringers) is shown as dashed line 11. In this case, the mean orientation of the first set 8 of stringers is the same as the longitudinal axis 10 of first wing skin portion 3, though this need not be the case. Second set 9 of stringers comprises five stringers 9A-E, each of which extends from third wing skin region 7 to second wing skin region 6. The mean orientation of five stringers 9A-E (and therefore the mean orientation of the second set 9 of stringers) is shown as dashed line 13. In this case, the mean orientation of the second set 9 of stringers is the same as the longitudinal axis 12 of second wing skin portion 4, though this need not be the case.

As can be best seen in Fig. 2, there is an overlap in the second wing skin region 6 between each of stringers 8A-D and adjacent stringers 9A-E of the second set 9 of stringers. Stringer 9A overlaps with adjacent stringer 8A. Stringer 8A overlaps with two adjacent stringers 9A, 9B. Stringer 9B overlaps with two adjacent stringers 8A, 8B. Stringer 8B overlaps with two adjacent stringers 9B, 9C. Stringer 9C overlaps with two adjacent stringers 8B, 8C. Stringer 8C overlaps with two adjacent stringers 9C, 9D. Stringer 9D overlaps with two adjacent stringers 8C, 8D. Stringer 8D overlaps with two adjacent stringers 9D, 9E. Stringer 9E overlaps with one adjacent stringer 8D. This overlap between stringers produces a high stringer density in regions of the wing arrangement that may be subjected to high forces, such as regions of the wing skin where a change in shape or a discontinuity in shape occur. The overlapping of stringers to produce a high density of stringers in a particular region may result in allowing the density of stringers out of said overlap region to be lower than if no overlap was present. This may potentially save weight. The overlap between adjacent stringers is about 10% of the length of the second set 9 of stringers 9A-E, and about 3% of the length of the first set 8 of stringers 8A-D. As can be seen in Figs. 1 and 2, there is overlap between the stringers in a direction parallel to longitudinal axis 10 of first wing skin portion 3, and in a direction parallel to longitudinal axis 12 of second wing skin portion 4.

It should be noted that Fig. 2 shows only part of the wing skin arrangement 1 of Fig. 1. As shown in Fig. 1, each stringer 8A-D has two ends, one end located in first wing skin region 5 and one end located in second wing skin region 6. Each stringer 9A-E has two ends, one end located in third wing skin region 7 and one end located in second wing skin region 6. Fig. 2 does not show the ends of stringers 8A-D that are located in first wing skin region 5. Fig. 2 does not show the ends of stringers 9A-E that are located in third wing skin region 7.

Referring to Fig. 1, the end of each of the stringers 8A-D of the first set 8 of stringers that is located in the second wing skin region 6 is closer to the third region 7 than the ends of the respective adjacent stringers 9A-E of the second set 9 that are also located in the second wing skin region 6. For example, the end of stringer 8A located in the second wing skin region 6 is closer to the third region 7 than the ends of stringers 9A, 9B that are located in the second wing skin region 6. The end of stringer 8B located in the second wing skin region 6 is closer to the third region 7 than the ends of stringers 9B, 9C that are located in the second wing skin region 6. The end of stringer 8C located in the second wing skin region 6 is closer to the third region 7 than the ends of stringers 9C, 9D located in the second wing region 2. The end of stringer 8D located in the second wing skin region 6 is closer to the third region 7 than the ends of stringers 9D, 9E located in the second wing skin region 6. Similarly, the end of each of the stringers 9A-E of the second set 9 that is located in the second wing skin region 6 is closer to the first region 5 than the end of the respective adjacent stringers 8A-D of the first set 8 of stringers that is located in the second wing skin region 6. For example, the end of stringer 9A located in the second wing skin region 6 is closer to the first region 5 than the end of stringer 8A located in the second wing skin region 6. The end of stringer 9B located in the second wing skin region 6 is closer to the first region 5 than the ends of stringers 8A, 8B located in the second wing skin region 6. The end of stringer 9C located in the second wing skin region 6 is closer to the first region 5 than the ends of stringers 8B, 8C located in the second wing skin region 6. The end of stringer 9D located in the second wing skin region 6 is closer to the first region 5 than the ends of stringers 8C, 8D located in the second wing skin region 6. The end of stringer 9E located in the second wing skin region 6 is closer to the first region 5 than the end of stringer 8D located in the second wing skin region 6.

The wing arrangement of Figs. 1 and 2 illustrates a wing arrangement in accordance with the second aspect of the present invention in so far as the mean orientation of the first 8 set of stringers 8A-D is not parallel to the mean orientation of the second 9 set of stringers 9A-E. Such an arrangement of non-parallel stringers facilitates the support of wing skins of non-standard geometry. In this connection, wing skins are typically linear, and therefore are suitably supported by linear stringers. In the present case, there is a "kink" in the wing skin geometry arising from the shape and arrangement of the first 3 and second 4 wing skin portions. The second wing skin region 6 is the location of the "kink" in the shape of the wing skin 2. First wing skin portion 3 is best supported by a first set 8 of linear stringers 8A-D that extend from a wing tip portion (first wing skin region 5) to a second wing skin portion 6, the mean orientation of stringers 8A-D being shown as dashed line 11. Second wing skin portion 4 is best supported by a second set 9 of linear stringers 9A-E that extend from a wing root portion (third wing skin region 7) to a second wing skin portion 6, the mean orientation of stringers 9A-E being shown as dashed line 12. As described above, the mean orientation of the first set 8 of stringers 8A-D is at an angle of about 160 degrees to the mean orientation of the second set of stringers 9A-E. The overlap, as described above, between the first set 8 of stringers and the second set 9 of stringers provides additional benefits, as described above.

The wing skin 2, the first set 8 of stringers and the second set 9 of stringers are formed from composite materials. In the present example, the wing arrangement 1 is formed by laying-up composite precursors to the wing skin 2, the first set 8 of stringers and the second set 9 of stringers using suitable moulds and formers, and then curing those precursors to form the wing skin 2, the first set 8 of stringers and the second set 9 of stringers. The composite precursors may comprise pre-preg, for example. Alternative methods may be used, of course. For example, a composite wing skin 2 and composite stringers 8A-D, 9A-E may be formed separately from one another (for example, from precursor material). The composite stringers 8A-D, 9A-E may then be attached using known, conventional means to wing skin 2.

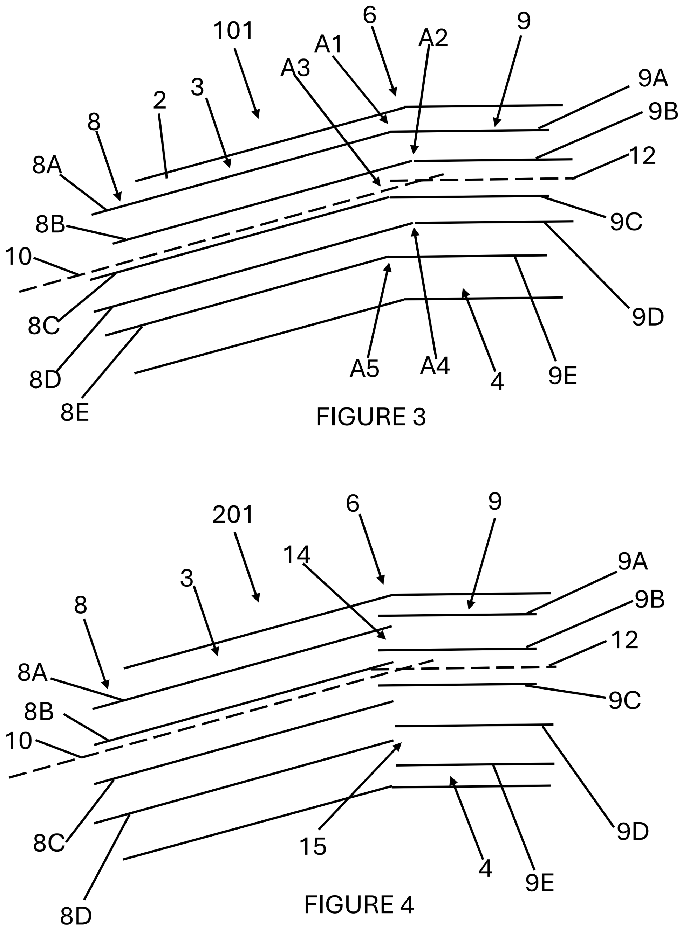

The example of Figs. 1 and 2 describes a wing arrangement in which each stringer (aside from the outmost stringers 9A, 9E) overlaps with two adjacent stringers. Other overlap configurations are entirely possible, as will now be described by way of example only with reference to Fig. 3. The aircraft wing arrangement is denoted generally by reference numeral 101, and comprises wing skin 2, and first set 8 of stringers and the second set 9 of stringers for supporting wing skin 2. Wing skin 2 comprises an elongate, outboard, first portion 3 that extends from an outboard first wing skin region (not shown) to a second wing skin region 6. Wing skin 2 also comprises an inboard second portion 4 that extends from an inboard wing skin region (not shown) to second wing skin region 6. Second wing skin region 6 is located between the inboard and outboard wing skin regions. As in the wing skin arrangement of Fig. 1 and 2, the longitudinal axis 10 of first wing skin portion 3 and longitudinal axis 12 of second wing skin portion 4 are not parallel, with an angle of about 160 degrees between the two longitudinal axes 10, 12. First set 8 of stringers comprises five stringers 8A-E, each of which extends from first wing skin region 5 to second wing skin region 6. Second set 9 of stringers comprises five stringers 9A-E, each of which extends from third wing skin region (not shown). The overlap of the stringers will now be described. An end of each of stringers 8A-E is proximate to an end of a respective stringer 9A-9E. In this connection, an end of stringer 8A is proximate to an end of stringer 9A, meeting at point A1. An end of stringer 8B is proximate to an end of stringer 9B, meeting at point A2. An end of stringer 8C is proximate to an end of stringer 9C, meeting at point A3. An end of stringer 8D is proximate to an end of stringer 8D, meeting at point A4. An end of stringer 8E is proximate to an end of stringer 9E, meeting at point A5. This produces a staggering or zig-zag of meeting points A1-5. This potentially facilitates the staggering of rivets used to attach stringers to the wing skin, which may be beneficial. As can be seen in Fig. 3, there is overlap between the stringers in a direction parallel to longitudinal axis 10 of first wing skin portion 3, and in a direction parallel to longitudinal axis 12 of second wing skin portion 4.

In this arrangement, there is an overlap between various stringers 8A-E of the first set 8 of stringer and various stringers 9A-E of the second set 9 of stringers. Stringer 8A does not overlap with any adjacent stringer of the second set 9, in either a direction parallel to longitudinal axis 10 or a direction parallel to longitudinal axis 12. Stringer 8B overlaps with both stringers 9B and 9C, both in a direction parallel to longitudinal axis 10 and in a direction parallel to longitudinal direction 12. Stringer 8C does not overlap with any adjacent stringer of the second set 9, in either a direction parallel to longitudinal axis 10 or a direction parallel to longitudinal axis 12. Stringer 8D overlaps with both stringers 9C and 9D, both in a direction parallel to longitudinal axis 10 and in a direction parallel to longitudinal axis 12. Stringer 8E does not overlap with any adjacent stringer of the second set 9, in either a direction parallel to longitudinal axis 10 or a direction parallel to longitudinal axis 12. Similarly, stringer 9A overlaps with stringer 8B, both in a direction parallel to longitudinal axis 10 and in a direction parallel to longitudinal axis 12. Stringer 9B does not overlap with any adjacent stringer of the first set 8, in either a direction parallel to longitudinal axis 10 or a direction parallel to longitudinal axis 12. Stringer 9C overlaps with both stringers 8B and 8C, both in a direction parallel to longitudinal axis 10 and in a direction parallel to longitudinal axis 12. Stringer 9D does not overlap with any adjacent stringer of the first set 8, in either a direction parallel to longitudinal axis 10 or a direction parallel to longitudinal axis 12. Stringer 9E overlaps with stringer 8D, both in a direction parallel to longitudinal axis 10 and in a direction parallel to longitudinal axis 12.

The end portions of stringers 8B and 8D that are located in the wing skin second region 6 are closer to an inboard region of the wing skin 2 than the end portions of stringers 8A, 8C and 8E that are located in the wing skin second region 6, and that the end portions of stringers 9A, 9C and 9E that are located in wing skin second region 6 are closer to an outboard region of the wing skin 2 than the end portions of stringers 9B and 9D that are located in the wing skin second region 6.

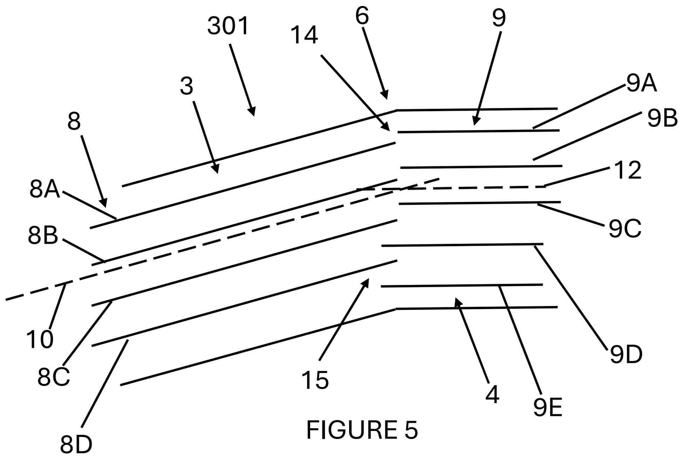

The examples of Figs. 1, 2 and 3 describe wing arrangements in which stringers overlap with one another in a direction parallel to both longitudinal axes 10, 12 across the whole width of the wing skin. Other arrangements are possible, as will now be described by way of example only with reference to Figs. 4 and 5. Fig. 4 shows a wing arrangement denoted generally by reference numeral 201. The numbered features of wing arrangement 201 are essentially the same as those features bearing the same reference numerals as described above in relation to the wing arrangement of Figs. 1 and 2. In wing arrangement 201, there is overlap between stringers of the first set 8 of stringers and the second set 9 of stringers in the forward 14 region of the wing arrangement 201 in a direction parallel to longitudinal axis 10 and in a direction parallel to longitudinal axis 12, but there is only overlap between stringers of the first set 8 of stringers and the second set 9 of stringers in the rearward 15 region of the wing arrangement 201 in a direction parallel to longitudinal axis 10, but not in a direction parallel to longitudinal axis 12. In this connection, stringer 9A overlaps with adjacent stringer 8A, stringer 8A overlaps with adjacent stringers 9A, 9B, stringer 9B overlaps with adjacent stringers 8A, 8B, stringer 8B overlaps with adjacent stringers 9B, 9C, stringer 9C overlaps with adjacent stringers 8B, 8C and stringer 8C overlaps with adjacent stringer 9C, such overlap being in a direction parallel to longitudinal axis 10 and in a direction parallel to longitudinal axis 12. However, there is overlap between stringer 8C and adjacent stringer 9D only in a direction parallel to longitudinal axis 10 and not in a direction parallel to longitudinal axis 12. Similarly, there is overlap between stringer 9D and adjacent stringer 8C only in a direction parallel to longitudinal axis 10 and not in a direction parallel to longitudinal axis 12. There is no overlap between stringer 9D and adjacent stringer 8D, in either a direction parallel to longitudinal axis 10 or in a direction parallel to longitudinal axis 12. There is overlap between stringer 8D and adjacent stringer 9E only in a direction parallel to longitudinal axis 10, but not in a direction parallel to longitudinal axis 12.

Yet another example of an embodiment of a wing arrangement of the present invention will now be described by way of example only with reference to Fig. 5. Fig. 5 shows a wing arrangement denoted generally by reference numeral 301. The numbered features of wing arrangement 301 are essentially the same as those features bearing the same reference numerals as described above in relation to the wing arrangement of Figs. 1 and 2. In wing arrangement 301, there is no overlap between stringers of the first set 8 of stringers and the second set 9 of stringers in the forward 14 region of the wing arrangement 301, but there is overlap between stringers of the first set 8 of stringers and the second set 9 of stringers in the rearward 15 region of the wing arrangement 301. In this connection, stringer 9A does not overlap with adjacent stringer 8A, stringer 8A does not overlap with adjacent stringers 9A, 9B, stringer 9B does not overlap with adjacent stringers 8A, 8B, stringer 8B does not overlap with adjacent stringers 9B, 9C, stringer 9C does not overlap with adjacent stringers 8B, 8C. However, stringer 8C overlaps with adjacent stringer 9D, stringer 9D overlaps with adjacent stringers 8C, 8D, stringer 8D overlaps with adjacent stringers 9D, 9E and stringer 9E overlaps with adjacent stringer 8D.

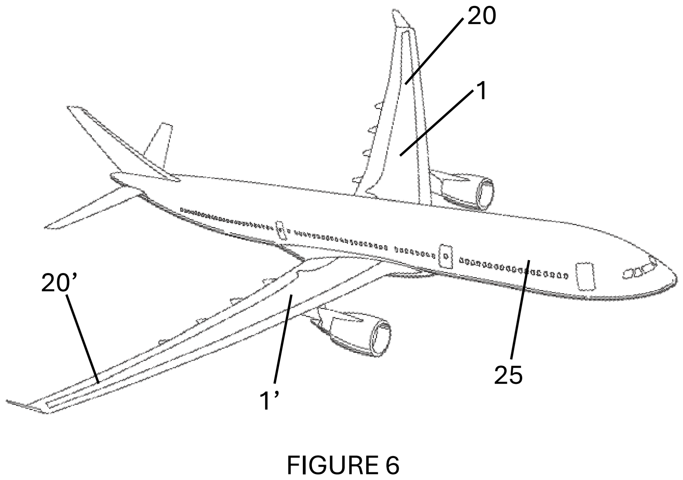

An example of an embodiment of an aircraft wing and an aircraft will now be described by way of example only with reference to Fig. 6. Aircraft 25 is a single-aisle passenger aircraft comprising aircraft wings 20, 20'. Aircraft wing 20 comprises two wing arrangements 1, 21 substantially as described above in relation to Figs. 1 and 2. Aircraft wing 20' comprises two wing skin arrangements 1', 21' substantially as described above in relation to Figs. 1 and 2. Wing skin arrangements 1, 1' provide an upper wing skin, and wing skin arrangements 21, 21' provide a lower wing skin. Each aircraft wing 20, 20' also comprises other wing components, such as ribs, spars and a wing tip.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

While the Examples above describe the use of sets of stringers comprising 4, 5 or 6 stringers, those skilled in the art will realise that other numbers of stringers could be used.

While the Examples above disclose the use of composite stringers that are made by laying-up the stringers and co-curing the stringers with the wing skin, it would be possible to laying-up the stringers and cure onto a pre-cured wing skin, or to pre-cure the stringers and attach the cured stringers to the wing skin.

While the Examples above disclose the use of composite stringers, those skilled in the art will realise that non-composite stringers may also be used.

While the Examples above disclose composite wing skin, those skilled in the art will realise that non-composite wing skin may be used. The wing is optionally a modular wing, suitable for forming part of a modular aircraft.

While the Examples above disclose the first and second sets of stringers being non-parallel, it is possible, at least for the wing arrangement of the first aspect of the invention, for the first and second sets of stringers to be parallel to one another.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An aircraft wing arrangement, the aircraft wing arrangement comprising:
a wing skin;
a first set of stringers for providing support to the wing skin, and extending from a first region of the wing skin to a second region of the wing skin; and
a second set of stringers for providing support to the wing skin, and extending from a third region of the wing skin to the second region of the wing skin;
wherein the second region of the wing skin is between the first and third regions of the wing skin; and
wherein there is overlap between at least one stringer of the first set of stringers and at least one adjacent stringer of the second set of stringers in the second region of the wing skin.

2. The aircraft wing arrangement according to claim 1, comprising a first wing skin portion extending from the first region of the wing skin to the second region of the wing skin, and a second wing skin portion extending from the third region of the wing skin to the second region of the wing skin,
the first wing skin portion having a first longitudinal axis from the first region of the wing skin to the second region of the wing skin, the second wing skin portion having a second longitudinal axis from the third region of the wing skin to the second region of the wing skin,
wherein there is an overlap between at least one stringer of the first set of stringers and at least one adjacent stringer of the second set of stringers in the second region of the wing skin in a direction parallel to the first longitudinal axis and/or in a direction parallel to the second longitudinal axis.

3. The aircraft wing arrangements according to claim 2, wherein there is an overlap between at least one stringer of the first set of stringers and at least one adjacent stringer of the second set of stringers in the second region of the wing skin in a direction parallel to the first longitudinal axis and in a direction parallel to the second longitudinal axis.

4. The aircraft wing arrangement according to any preceding claim, wherein there is an overlap (i) between at least one stringer of the first set of stringers and two adjacent stringers of the second set of stringers, and/or (ii) between each of a plurality of stringers of the first set of stringers and at least one respective adjacent stringer of the second set of stringers, and/or (iii) between each stringer of a majority of the first set of stringers and at least one respective adjacent stringer of the second set of stringers, and/or (iv) between each stringer of the first set of stringers and two respective adjacent stringers of the second set of stringers or there is an overlap between each of the second set of stringers and two respective adjacent stringers of the first set of stringers.

5. The aircraft wing arrangement according to any preceding claim, wherein an end of a first stringer of the first set of stringers abuts or is adjacent to an end of a first stringer of the second set of stringers, and wherein there is an overlap between the first stringer of the first set of stringers and a second and/or a third stringer of the second set of stringers, the second and third stringers of the second set of stringers being adjacent to, and to either side of the first stringer of the second set of stringers, and wherein there is no overlap between the first stringer of the second set of stringers and adjacent respective stringers of the first set of stringers, optionally wherein an end of the second stringer of the second set of stringers abuts or is adjacent to an end of a second stringer of the first set of stringers, the second stringer of the first set of stringers being adjacent to, and to one side of, the first stringer of the first set of stringers, wherein there is overlap between the second stringer of the second set of stringers and the first stringer of the first set of stringers, wherein there is no overlap between the second stringer of the first set of stringers and adjacent stringers of the second set of stringers.

6. The aircraft wing arrangement according to any of claims 1 to 4, wherein the first set of stringers comprises first, second and third stringers, the second and third stringers being adjacent to, and either side of the first stringer; the second set of stringers comprises a first, second and third stringers, the second and third stringers being adjacent to, and either side of the first stringer;
wherein there is overlap between the first stringer of the first set of stringers and the first stringer and the second stringer of the second set of stringers, or between the first stringer or the first set of stringers and the first stringer and the third stringer of the second set of stringers;
and wherein there is overlap between the second stringer of the first set of stringers and the first stringer and the second stringer of the second set of stringers, or between the third stringer of the first set of stringers and the first stringer and the third stringer of the second set of stringers.

7. The aircraft wing arrangement according to any preceding claim, wherein, in the second region of the wing skin, the spacing between adjacent stringers in the first set of stringers is substantially the same for a majority of pairs of adjacent stringers in the first set of stringers, and, in the second region of the wing skin, the spacing between adjacent stringers in the second set of stringers is substantially the same for a majority of pairs of adjacent stringers in the second set of stringers.

8. The aircraft wing arrangement according to any preceding claim, comprising a first longitudinal axis of the wing skin portion from the first region of the wing skin to the second region of the wing skin and a second longitudinal axis of the wing skin portion from the third region of the wing skin to the second region of the wing skin, wherein the first and second longitudinal axes are not parallel to one another.

9. The aircraft wing arrangement according to claim 8, wherein the angle between the first and second longitudinal axes is no more than 175 degrees, and/or at least 140 degrees.

10. The aircraft wing arrangement according to any preceding claim wherein the first set of stringers is not parallel to the second set of stringers and/or wherein, in the second region of the wing skin, a stringer of the first set of stringers is not parallel to an adjacent stringer of the second set of stringers with which said stringer of the first set of stringer overlaps.

11. The aircraft wing arrangement according to any preceding claim, wherein the first region of the wing skin is an outboard region, and the second region of the wing skin is an inboard region.

12. The aircraft wing according to any preceding claim, wherein the proportion of the length of the at least one stringer of the first set of stringers that overlaps with at least one adjacent stringer of the second set of stringers in the second region of the wing skin is at least 3%, and optionally at least 5%, of the length of said at least one stringer of the first set of stringers.

13. An aircraft wing arrangement, the aircraft wing arrangement comprising:
a wing skin;
a first set of stringers for providing support to the wing skin, and extending from a first region of the wing skin to a second region of the wing skin; and
a second set of stringers for providing support to the wing skin, and extending from a third region of the wing skin to the second region of the wing skin;
wherein the second region of the wing skin is between the first and third regions of the wing skin;
a mean orientation of the first set of stringers relative to the wing skin is not parallel to a mean orientation of the second set of stringers relative to the wing skin.

14. An aircraft wing arrangement comprising:
a wing skin;
a first set of a plurality of stringers for providing support to the wing skin, and extending from an outboard region of the wing skin to a second region of the wing skin; and
a second set of a plurality of stringers for providing support to the wing skin, and extending from an inboard region of the wing skin to the second region of the wing skin;
wherein the second region of the wing skin is between the inboard and outboard regions of the wing skin;
each of the first set of stringers and each of the second set of stringers having an end portion in the second region of the wing skin; and
(i) each of the end portions of the first set of stringers in the second region of the wing skin being proximate to an end portion of a corresponding stringer of the second set of stringers in the second region of the wing skin;
the end portions of alternate stringers of the first set of stringers in the second region of the wing skin being closer to the inboard region of the wing skin than the end portions of the other stringers of the first set of stringers in the second region of the wing skin; and
the end portions of the alternate stringers of the second set of stringers in the second region of the wing skin being closer to the outboard region of the wing skin than the end portions of the other stringers of the second set of stringers in the second region of the wing skin; or
(ii) the end portions of the first set of stringers in the second region of the wing skin being closer to the inboard region of the wing skin than the end portions of the second set of stringers in the second region of the wing skin; and
the end portions of the second set of stringers in the second region of the wing skin being closer to the outboard region of the wing skin that the end portions of the first set of stringers in the second region of the wing skin.

15. An aircraft wing or an aircraft comprising an aircraft wing arrangement according to any preceding claim.
